# EUROPÄISCHE PATENTSCHRIFT

(11) **EP 2 536 101 B1**
(45) Veröffentlichungstag und Bekanntmachung des Hinweises auf die Patenterteilung: **21.02.2018**
(21) Anmeldenummer: 12004347.6
(22) Anmeldetag: 08.06.2012
(51) Int. Cl.: H04L 29/06, H04W 12/02

(54) **Verfahren zum Aufbau einer verschlüsselten Verbindung, Netzvermittlungseinheit und Telekommunikationssystem**
Method for creating an encrypted connection, network distribution unit and telecommunication system
Procédé de montage d'une liaison verrouillée, unité de commutation de réseau et système de télécommunication

(30) Priorität: 14.06.2011 DE 102011106484
(43) Veröffentlichungstag der Anmeldung: 19.12.2012
(73) Patentinhaber: T-Mobile Austria GmbH, 1030 Wien (AT)
(72) Erfinder: Gailberger, Vanja, 1030 Wien (AT); Sedlacec, Michael, 1210 Wien (AT)
(74) Vertreter: Schwöbel, Thilo K.

(56) Entgegenhaltungen:
- EP-A1- 2 293 515
- EP-A2- 1 416 665
- US-A1- 2002 178 356

## Beschreibung

### Stand der Technik

Die Erfindung betrifft ein Verfahren zum Aufbau einer verschlüsselten Verbindung zwischen einem Netzteilnehmer und einer mit einer Netzvermittlungseinheit gekoppelten Basisstation eines Mobilfunknetzes. Ferner betrifft die Erfindung eine entsprechende Netzvermittlungseinheit und ein entsprechendes Telekommunikationsnetzwerk.

Es ist allgemein bekannt, beispielsweise aus der europäischen Patentveröffentlichung EP 2 293 515 A1 bzw. aus der amerikanischen Patentveröffentlichung US 2008/0 233 887 A1, Mobilfunkverbindungen zur Erhöhung der Sicherheit mittels Ciphering-Algorithmen zu verschlüsseln. Hierbei finden verschiedene Ciphering-Algorithmen Anwendung: Der A5/1-Algorithmus ist ein kryptographischer Algorithmus zum Schutz der Sprachkommunikation via GSM (Global System for Mobile Communications), welcher hauptsächlich in West-Europa und Nordamerika Verwendung findet. Dieser Verschlüsselungsalgorithmus wurde jedoch im Jahr 2003 geknackt, so dass diese Methode nicht mehr ausreichend Sicherheit gewährleistet. Der A5/2-Algorithmus ist ein schwächerer Verschlüsselungsalgorithmus, der vornehmlich in Asien und Ost-Europa angewendet wird.

Ferner gibt es den A5/3-Algorithmus (auch als KASUMI-Chiffrierung bezeichnet), welcher zur Verschlüsselung der Kommunikation in GSM verwendet wird und eine im Vergleich zu A5/1- und A5/2-Verschlüsselungen eine höhere Sicherheit bietet. Der A5/3-Algorithmus ist für GSMbeispielsweise in den Spezifikationen "3GPP TS 55.216 (V6.2.0)", "3GPP TS 55.217 (V6.1.0)" und "3GPP TS 55.218 (V6.1.0)" näher spezifiziert.

Nachteilig an der Verwendung des A5/3-Algorithmus ist, dass bei manchen in ein Mobilfunknetz eingebundenen Endgeräten der Nachrichtenfluss mit dem Mobilfunknetz schon allein durch das netzseitige Anbieten des A5/3-Algorithmus gestört wird. Insbesondere gibt es den Fall, dass Endgeräte, welche den A5/3-Algorithmus nicht unterstützen, während einer Aktualisierung des Aufenthaltsortes im Mobilfunknetz (bekannt unter der Bezeichnung "Location Update Procedure"), wenn sie vom Mobilfunknetz eine Signalisierungsnachricht ("Cipher Mode Command") zugesandt bekommen, in welcher ihnen neben dem konventionellen A5/1-Verschlüsselungsalgorithmus auch der neuere A5/3- Verschlüsselungsalgorithmus angeboten wird, keine Signalisierungsantwort ("Cipher Mode

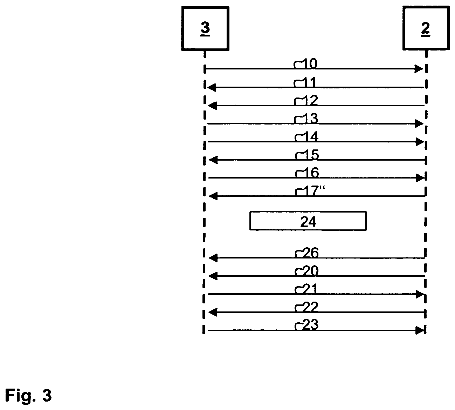

Complete") zum Auswählen eines der angebotenen Verschlüsselungsalgorithmen an das Mobilfunknetz senden, obwohl sie den von ihnen unterstützten A5/1-Algorithmus wählen könnten. Die Folge ist, dass die Aufenthaltsaktualisierung ("Location Update"), sowie alle anderen bekannten Signalisierungsevents, wie "Power on, TMSI unknown", "Power on, TMSI known", "Periodic Location Update", "Callsetup", "SMS MO/MT" bei denen üblicherweise Ciphering verwendet wird, für diese Endgeräte nicht mehr durchführbar sind. Die Ausfälle führen dazu, dass eine Aktivierung des vergleichsweise sicheren A5/3-Algorithmus durch den Netzbetreiber nicht möglich ist. Ein solcher Ausfall wird ferner anhand der Figur 3 beschrieben.

### Offenbarung der Erfindung

Der Erfindung liegt daher die Aufgabe zu Grunde ein Verfahren zum Aufbau einer verschlüsselten Telekommunikationsverbindung zur Verfügung zu stellen, bei welchem trotz der Aktivierung einer Verschlüsselung, die zu einer Störung der Kommunikation zwischen dem Netzteilnehmer und einer Netzvermittlungseinheit führt, der Aufbau einer auf einer anderen Verschlüsselung basierenden verschlüsselten Kommunikation sichergestellt wird.

Diese Aufgabe wird erfindungsgemäß durch ein Verfahren zum Aufbau einer verschlüsselten Verbindung zwischen einem Netzteilnehmer und einer mit einer Netzvermittlungseinheit gekoppelten Basisstation eines Mobilfunknetzes gelöst, welches die Schritte umfasst: Senden einer ersten Signalisierungsnachricht zum Anbieten eines Verschlüsselungsmechanismus von der Netzvermittlungseinheit an den Netzteilnehmer in einem ersten Verfahrensschritt, wobei mittels der ersten Signalisierungsnachricht wenigstens ein erster Verschlüsselungsalgorithmus und ein zweiter Verschlüsselungsalgorithmus angeboten wird; Warten auf eine vom Netzteilnehmer an die Netzvermittlungseinheit gesendete Signalisierungsantwort zum Auswählen eines der mittels der ersten Signalisierungsnachricht angebotenen Verschlüsselungsmechanismen in einem zweiten Verfahrensschritt; Senden einer zweiten Signalisierungsnachricht zum Anbieten eines Verschlüsselungsmechanismus von der Netzvermittlungseinheit an den Netzteilnehmer in einem dritten Verfahrensschritt, wenn im zweiten Verfahrensschritt innerhalb einer vorbestimmten Zeitspanne keine vom Netzteilnehmer an die Netzvermittlungseinheit gesendete Signalisierungsantwort detektiert wird, wobei mittels der zweiten Signalisierungsnachricht nur der wenigstens eine erste Verschlüsselungsalgorithmus angeboten wird.

In vorteilhafter Weise wird bei dem erfindungsgemäßen Verfahren die zweite Signalisierungsnachricht an den Netzteilnehmer gesendet, wenn erkannt wird, dass der Netzteilnehmer auf die erste Signalisierungsnachricht nicht antwortet. In der zweiten Signalisierungsnachricht werden dem betreffenden Netzteilnehmer dann nur noch der erste Verschlüsselungsalgorithmus bzw. die ersten Verschlüsselungsalgorithmen angeboten, während der zweite Verschlüsselungsalgorithmus nicht erneut angeboten wird. In vorteilhafter Weise wird somit eine auf dem Anbieten des zweiten Verschlüsselungsalgorithmus basierende Störung des Nachrichtenflusses zwischen dem Netzteilnehmer und der Netzvermittlungseinheit unterbunden. Als zweiter Verschlüsselungsalgorithmus wird vorzugsweise ein A5/3-Verschlüsselungsalgorithmus (auch als KASUMI-Blockchiffrierung bezeichnet) angeboten, während als erster Verschlüsselungsalgorithmus ein A5/1-Verschlüsselungsalgorithmus angeboten wird. Auf diese Weise kann im Telekommunikationssystem und insbesondere im gesamten Mobilfunknetz die vergleichsweise sichere A5/3-Verschlüsselung aktiviert werden, wobei sichergestellt ist, dass bei denjenigen Netzteilnehmern, bei denen die Aktivierung der A5/3-Verschlüsselung zu Störungen führt, weiterhin über die konventionelle A5/1-Verschlüsselung eine ungestörte Nachrichtenübermittlung stattfindet. Alternativ ist natürlich auch denkbar, dass im Rahmen der ersten Verschlüsselungsalgorithmen ein A5/0- (keine Verschlüsselung) und/oder ein A5/2-Algorithmus anstelle des A5/1- Algorithmus oder zusätzlich zum A5/1-Algorithmus angeboten werden. Die Zeitspanne ist vorzugsweise fest definiert und/oder beliebig einstellbar. Denkbar ist auch, dass die Zeitspanne dynamisch angepasst bzw. optimiert wird. Der Netzteilnehmer 3 umfasst insbesondere ein Teilnehmerendgerät (auch als UE oder User Equipment bezeichnet), wie beispielsweise ein Mobiltelefon, einen PDA (Personal Digital Assistent), ein mit einem GSM-Modul ausgestatteten Laptop oder dergleichen, welches über die verschlüsselte Luftschnittstelle mit der Basisstation verbunden ist. Die Steuerung der Verschlüsselung erfolgt über die Netzvermittlungseinheit. Die Netzvermittlungseinheit umfasst vorzugsweise eine Mobilfunk-Vermittlungsstelle (auch als MSC oder Mobile Services Switching Centre bezeichnet) oder einen Netzknoten bzw. Signalisierungspunkt im Mobilfunknetz (auch als SSP oder Service Signalling Point in einem SS7-Network bezeichnet).

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass in einem vierten Verfahrensschritt eine Signalisierungsantwort von dem Netzteilnehmer an die Netzvermittlungseinheit gesendet wird, mittels welcher der eine erste Verschlüsselungsalgorithmus oder einer der ersten Verschlüsselungsalgorithmen ausgewählt wird, und wobei einem fünften Verfahrensschritt eine mittels des ausgewählten ersten Verschlüsselungsalgorithmus verschlüsselte Telekommunikationsverbindung zwischen dem Netzteilnehmer und der mit der Netzvermittlungseinheit gekoppelten Basisstation aufgebaut wird. Auf diese Weise wird sichergestellt, dass auf konventionellem Weg eine auf dem ersten Verschlüsselungsalgorithmus basierende Telekommunikationsverbindung hergestellt wird, auch wenn das Anbieten des zweiten Verschlüsselungsalgorithmus zu einer Störung der Nachrichtenübermittelung zwischen dem Netzteilnehmer und der Netzvermittlungseinheit führte.

Gemäß einer bevorzugten Ausführungsform der vorliegenden Erfindung ist vorgesehen, dass in einem sechsten Verfahrensschritt eine Teilnehmeridentifizierung (IMSI) des Netzteilnehmers und eine der Teilnehmeridentifizierung zugeordnete Verschlüsselungsinformation in einem Besucherregister der Netzvermittlungseinheit gespeichert werden. In vorteilhafter Weise wird somit im Besucherregister vermerkt, wenn von einem bestimmten Netzteilnehmer (bzw. einer bestimmten IMSI) auf die erste Signalisierungsnachricht bzw. das Anbieten des zweiten Verschlüsselungsalgorithmus keine Signalisierungsnachricht innerhalb der Zeitspanne detektiert werden konnte, so dass diesem Netzteilnehmer vorzugsweise nicht erneut eine erste Signalisierungsnachricht gesendet wird bzw. der zweite Verschlüsselungsalgorithmus angeboten wird. Vorzugsweise wird bei einem erneuten Aufbau einer verschlüsselten Telekommunikationsverbindung zwischen dem Netzteilnehmer und der Basisstation die Teilnehmeridentifizierung des Netzteilnehmers im Besucherregister angefragt wird und in Abhängigkeit der im Besucherregister gespeicherten Verschlüsselungsinformation direkt eine zweite Signalisierungsnachricht von der Netzvermittlungseinheit an den Netzteilnehmer gesendet wird. Auf diese Weise wird sichergestellt, dass dem Netzteilnehmer nur noch die ersten Verschlüsselungsalgorithmen angeboten werden.

Gemäß einer bevorzugten Ausführungsform der vorliegenden Erfindung ist vorgesehen, dass nach Ablauf einer vorbestimmten Aktualisierungszeitspanne die einer Teilnehmeridentifizierung zugeordnete Verschlüsselungsinformation aus dem Besucherregister wieder gelöscht und/oder bei einem erneuten Aufbau einer verschlüsselten Telekommunikationsverbindung zwischen dem Netzteilnehmer und der mit der Netzvermittlungseinheit gekoppelten Basisstation wieder eine erste Signalisierungsnachricht von der Netzvermittlungseinheit an den Netzteilnehmer gesendet wird. Vorzugsweise wird somit sichergestellt, dass dem Netzteilnehmer von Zeit zu Zeit der zweite Verschlüsselungsalgorithmus angeboten wird, auch wenn in der Vergangenheit daraufhin niemals eine Signalisierungsantwort empfangen werden konnte, so dass im Falle eines Gerätetausches bei diesem Netzteilnehmer trotzdem irgendwann auf den sicheren zweiten Verschlüsselungsalgorithmus umgeschaltet werden kann. Die Aktualisierungszeitspanne ist vorzugsweise fest eingestellt oder frei einstellbar. Denkbar ist auch, dass die Aktualisierungszeitspanne dynamisch angepasst bzw. optimiert wird.

Gemäß einer bevorzugten Ausführungsform der vorliegenden Erfindung ist vorgesehen, dass wenigstens der erste, der zweite und/oder der dritte Verfahrensschritt während einer Prozedur zur Aktualisierung des Aufenthaltsortes des Netzteilnehmers in einem Mobilfunknetz (auch als Location Update Procedure bezeichnet), während einer Prozedur zur Zuordnung eines austauschbaren Teilnehmeridentifikationsmoduls (TMSI) zum Netzteilnehmer, beispielsweise beim Einschalten eines Netzteilnehmergerätes (Power on, TMSI unknown oder Power off, TMSI known) und/oder während einer Prozedur zur Ausführung eines Kommunikationsdienstes, beispielsweise Rufaufbau oder SMS Versand (Callsetup, SMS MO/MT) durchgeführt werden. In vorteilhafter Weise wird bei sämtlichen unter Verwendung von Verschlüsselungsalgorithmen durchführbaren Signalisierungsprozeduren eine störungsfreie Nachrichtenübermittelung zwischen dem Netzteilnehmer und der Netzvermittlungseinheit gewährleistet.

Ein weiterer Gegenstand der vorliegenden Erfindung ist eine Netzvermittlungseinheit für ein Telekommunikationssystem, insbesondere für ein Mobilfunknetz, wobei die Netzvermittlungseinheit zum Senden einer ersten Signalisierungsnachricht zum Anbieten wenigstens eines ersten Verschlüsselungsalgorithmus und eines zweiten Verschlüsselungsalgorithmus an den Netzteilnehmer konfiguriert ist und wobei die Netzvermittlungseinheit zum Senden einer zweiten Signalisierungsnachricht an den Netzteilnehmer zum Anbieten nur des wenigstens einen ersten Verschlüsselungsalgorithmus, wenn innerhalb einer vorbestimmten Zeitspanne keine vom Netzteilnehmer gesendete Signalisierungsantwort detektiert wird, konfiguriert ist. In vorteilhafter Weise wird somit das erfindungsgemäße Verfahren mittels der entsprechend konfigurierten Netzvermittlungseinheit in das Telekommunikationssystem implementiert.

Ein weiterer Gegenstand der vorliegenden Erfindung ist ein Telekommunikationssystem, insbesondere ein Mobilfunknetz, aufweisend wenigstens eine erfindungsgemäße Netzvermittlungseinheit und wenigstens einen Netzteilnehmer. Vorzugsweise ist der A5/3-Verschlüsselungsalgorithmus in dem Telekommunikationssystem aktiviert, wobei in vorteilhafter Weise aufgrund des oben beschriebenen Verfahrens keine Ausfälle bestimmter Netzteilnehmer zu befürchten sind.

Ein weiterer Gegenstand der vorliegenden Erfindung ist ein Computerprogramm mit Programmcodemitteln, mit deren Hilfe alle Schritte des erfindungsgemäßen Verfahrens durchführbar sind, wenn das Computerprogramm auf einer erfindungsgemäßen Netzvermittlungseinheit, einem Computer oder einer entsprechenden Recheneinheit, insbesondere in einem erfindungsgemäßen Telekommunikationssystem ausgeführt wird.

Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer erfindungsgemäßen Netzvermittlungseinheit, einem Computer oder einer entsprechenden Recheneinheit, insbesondere in einem erfindungsgemäßen Telekommunikationssystem.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht einer Netzvermittlungseinheit und eines Telekommunikationssystems gemäß einer beispielhaften Ausführungsform der vorliegenden Erfindung.
- **Figuren 2a, 2b und 2c**: zeigen schematische Ansichten eines Verfahrens zum Aufbau einer verschlüsselten Telekommunikationsverbindung gemäß beispielhaften Ausführungsformen der vorliegenden Erfindung.
- **Figur 3**: zeigt eine schematische Ansicht eines Verfahrens zum Aufbau einer verschlüsselten Telekommunikationsverbindung gemäß dem Stand der Technik.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

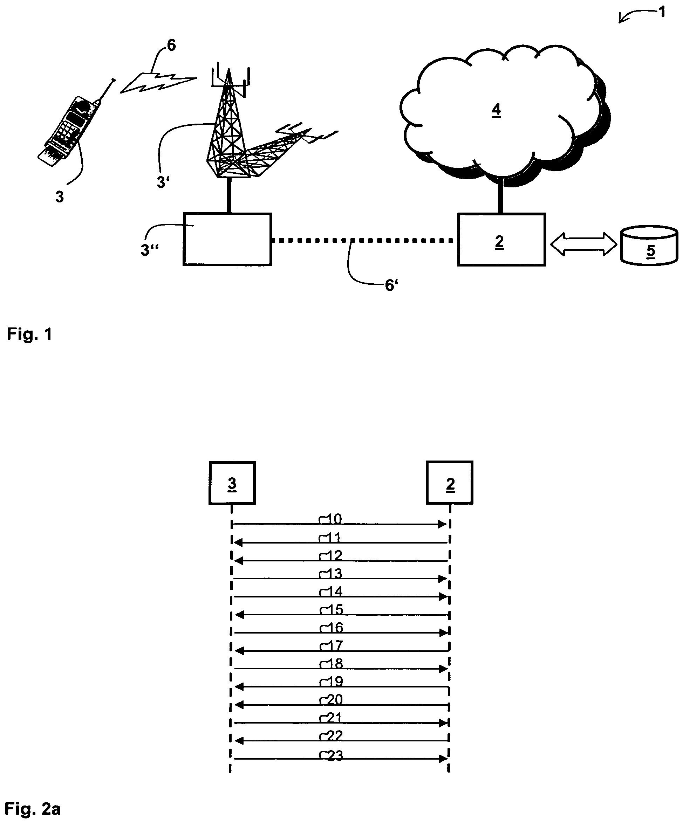

In **Figur 1** ist eine schematische Ansicht einer Netzvermittlungseinheit 2 und eines Telekommunikationssystems 1 gemäß einer beispielhaften Ausführungsform der vorliegenden Erfindung dargestellt. Das Telekommunikationssystem 1 umfasst dabei vorzugsweise ein GSM-Mobilfunknetz 4 (Global System for Mobile Communications). Das Telekommunikationssystem 1 weist ferner wenigstens einen Netzteilnehmer 3 auf, welcher mit einer Basisstation 3' (in GSM-Netzen auch als BTS bzw. Base Transceiver Station bezeichnet) und einer Basisstation-Steuereinheit 3" (in GSM-Netzen auch als BSC oder Base Station Controller bezeichnet) gekoppelt ist. Zwischen dem Netzteilnehmer 3 und der Basisstation 3' wird eine verschlüsselte Verbindung 6 (auch als Luftschnittstelle bezeichnet) aufgebaut, wobei die Verschlüsselung von der Netzvermittlungseinheit 2 gesteuert wird. Der Netzteilnehmer 3 umfasst insbesondere ein Teilnehmerendgerät (auch als UE oder User Equipment bezeichnet). Das Teilnehmerendgerät umfasst beispielsweise ein Mobiltelefon, einen PDA (Personal Digital Assistent), ein mit einem GSM-Modul ausgestatteten Laptop oder dergleichen. Die Netzvermittlungseinheit 2 ist einerseits zur Kopplung mit dem Netzteilnehmer 3 über die Basisstation 3' vorgesehen und andererseits mit dem übrigen Mobilfunknetz 4 über eine weitere Verbindung 6' verbunden, um eine Verbindung zwischen dem Netzteilnehmer 3 und dem übrigen Mobilfunknetz 4 herzustellen. Ferner weist die Netzvermittlungseinheit 2 ein Besucherregister 5 auf, welches zur Speicherung der Teilnehmeridentifizierung IMSI (International Mobile Subscriber Identity) des Netzteilnehmers 3 und eine dem Netzteilnehmer 3 zugeordnete Verschlüsselungsinformation dient. Die Netzvermittlungseinheit 2 umfasst vorzugsweise eine Mobilfunk-Vermittlungsstelle (auch als MSC oder Mobile Services Switching Centre bezeichnet) oder einen Netzknoten bzw. Signalisierungspunkt (auch als SSP oder Service Signalling Point in einem SS7-Network bezeichnet).

Die Netzvermittlungseinheit 2 ist ferner derart konfiguriert, dass die Netzvermittlungseinheit 2 beim Ausführen eines Signalisierungsdienstes, zum Aufbau der verschlüsselten Telekommunikationsverbindung 6 der Luftschnittstelle zwischen dem Netzteilnehmer 3 und Basisstation 3', eine erste Signalisierungsnachricht an den Netzteilnehmer 3 sendet, in welchem die Verwendung sowohl eines ersten Verschlüsselungsalgorithmus, insbesondere eines A5/1-Algorithmus, als auch eine zweiten Verschlüsselungsalgorithmus, insbesondere eines A5/3-Algorithmus (auch als KASUMI-Blockchiffrierung bezeichnet) angeboten wird. Die Netzvermittlungseinheit 2 ist ferner derart konfiguriert, dass wenn der Netzteilnehmer 3 nicht innerhalb einer vorgegebenen Zeitspanne eine entsprechende Signalisierungsantwort sendet, eine zweite Signalisierungsnachricht an den Netzteilnehmer 3 gesendet wird, in welchem nur noch die Verwendung des ersten Verschlüsselungsalgorithmus, insbesondere des A5/1-Algorithmus, angeboten wird.

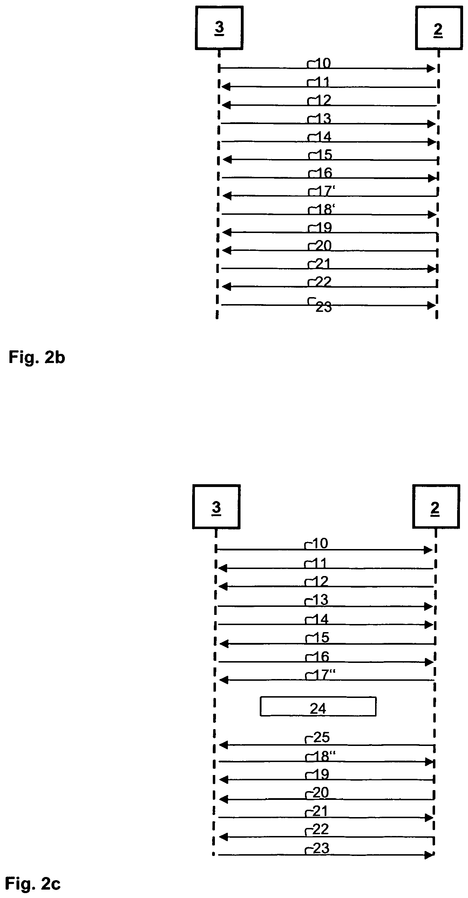

Das erfindungsgemäße Verfahren zum Aufbau der verschlüsselten Telekommunikationsverbindung 6 wird nachfolgend anhand der Figuren 2a, 2b und 2c im Detail beschrieben, wobei das erfindungsgemäße Verfahren hier jeweils anhand drei unterschiedlicher Konfigurationen erklärt wird.

In **Figur 2a** ist der Nachrichtenfluss bei einer Prozedur zur Aktualisierung des Aufenthaltsortes des Netzteilnehmers 3 (eine Location Update Procedure) zwischen der Netzvermittlungseinheit 2 und dem Netzteilnehmer 3 in einer Konfiguration dargestellt, in welcher die Netzvermittlungseinheit 2 die Verwendung des zweiten Verschlüsselungsalgorithmus bzw. des A5/3-Algorithmus anbietet und der Netzteilnehmer 3 in der Lage ist, den zweiten Verschlüsselungsalgorithmus bzw. den A5/3-Algorithmus zu verwenden. In einer ersten Nachricht 10 sendet der Netzteilnehmer 3 einen "Location Update Request" (Aufforderung zur Aufenthaltsortaktualisierung) zur Netzvermittlungseinheit 2. Die Netzvermittlungseinheit 2 bestätigt in einer zweiten Nachrichtung 11 das Vorliegen einer Datenverbindung zwischen der Netzvermittlungseinheit 2 und der Basisstation-Steuereinheit 3" ("Connection Confirm"). Anschließend sendet die Netzvermittlungseinheit 2 eine Identitätsanfrage "Identity Request" mittels einer dritten Nachricht 12 an den Netzteilnehmer 3. Der Netzteilnehmer 3 übermittelt in einer vierten Nachricht 13 ein "Classmark Update" an die Netzvermittlungseinheit 2 und in einer fünften Nachricht 14 seine Identitätsdaten ("Identity Response"). Anschließend wird in einer sechsten Nachricht 15 eine Authentifizierungsanfrage an den Netzteilnehmer 3 gesendet, woraufhin der Netzteilnehmer 3 Authentifizierungsdaten in einer siebten Nachricht 16 übermittelt.

Die Netzvermittlungseinheit 2 sendet daraufhin eine erste Signalisierungsnachricht 17 an den Netzteilnehmer 3, in welcher dem Netzteilnehmer 3 die Verwendung eines auf dem A5/1-Algorithmus basierenden ersten Verschlüsselungsalgorithmus, sowie die Verwendung eines auf dem A5/3-Algorithmus basierenden zweiten Verschlüsselungsalgorithmus angeboten werden. Die erste Signalisierungsnachrichtung 17 sieht beispielsweise wie folgt aus:

| |
|---|
| BSSAP |
| 00000000 BSSMAP = 0 (BSSMAP) |
| 00010010 Length Field = 18 |
| BSSMAP |
| Msg: CIPHER MODE COMMAND |
| 01010011 Tag = 83 (x53) |
| IE: Layer 3 header information |
| 00000111 Tag = 7 (x07) |
| 00000010 Length Field = 2 |
| ---0000 Not used = 0 |
| 0110-Protocol discriminator = 6 (Radio resources management messages) |
| ----0000 Not used = 0 |
| ---0---- TI flag = 0 (The message is sent from the side that originates the TI) |
| 000----- TI value = 0 |
| IE: Encryption information |
| 00001010 Tag = 10 (x0A) |
| 00001001 Length Field = 9 |
| -------1 No encryption = 1 (BSS may use the option) |
| ------1-GSM A5/1 = 1 (BSS may use the option) |
| -----0-- GSM A5/2 = 0 (BSS shall not use the option) |
| ----1--- GSM A5/3 = 1 (BSS may use the option) |
| ---0---- GSM A5/4 = 0 (BSS shall not use the option) |
| --0----- GSM A5/5 = 0 (BSS shall not use the option) |
| -0------ GSM A5/6 = 0 (BSS shall not use the option) |
| 0-GSM A5/7 = 0 (BSS shall not use the option) |
| Key = eb b4 23 57 a3 27 2c 00 |
| IE: Cipher response mode |
| 00100011 Tag = 35 (x23) |
| -0000000 Spare = 0 (Spare field (7 bits)) |
| 1------- Cipher response mode = 1 (IMEISV must be included by the Mobile Station) |

Wenn der Netzteilnehmer 3 in der Lage ist, - wie im vorliegenden Beispiel der Fall - den A5/3-Algorithmus zu verarbeiten, sendet er in einer Signalisierungsantwort 18 die Nachricht an die Netzvermittlungseinheit 2, dass für der A5/3-Algorithmus verwendet werden soll.

Die Signalisierungsantwort 18 sieht dann beispielsweise wie folgt aus:

| |
|---|
| BSSAP |
| 00000000 BSSMAP = 0 (BSSMAP) |
| 00010000 Length Field = 16 |
| BSSMAP |
| Msg: CIPHER MODE COMPLETE |
| 01010101 Tag = 85 (x55) |
| IE: Layer 3 message contents |
| 00100000 Tag = 32 (x20) |
| 00001011 Length Field = 11 |
| Mobile identity |
| 00010111 Tag = 23 (x17) |
| 00001001 Length Field = 9 |
| -----011 Type of identity = 3 (IMEISV) |
| ----0--- Odd/even indicator = 0 (Even number of identity digits and also when the TMSI is used) |
| Address signals = 3532330165997424f |
| IE: Chosen encryption algorithm |
| 00101100 Tag = 44 (x2C) |
| 00000100 Algorithm identifier = 4 (GSM A5/3) |

Als Verschlüsselungsalgorithmus wird somit der A5/3-Algorithmus, für die Verschlüsselung der Luftschnittstelle (Verbindung 6) zwischen dem Netzteilnehmer 3 und der Netzvermittlungseinheit 2 vereinbart. Die Netzvermittlungseinheit 2 sendet anschließend eine Bestätigung der durchgeführten Aufenthaltsaktualisierung ("Location Update Accept") in einer achten Nachricht 19 an den Netzteilnehmer 3, wobei hier nun die A5/3-Verschlüsselung angewendet wird. Anschließend wird mittels einer neunten Nachricht 20 ein "Clear Command"-Befehl an die Basisstation-Steuereinheit 3" gesendet, woraufhin dieser in einer zehnten Nachricht mit einer "Clear Complete"-Bestätigung antwortet. Abschließend sendet die Netzvermittlungseinheit 2 einen "Released" Befehl mittels einer elften Nachricht 22 an die Basisstation-Steuereinheit 3" und die Basisstation-Steuereinheit 3" antwortet mit einer "Release Completed"-Antwort in einer zwölften Nachricht 23.

In **Figur 2b** ist erneut der Nachrichtenfluss bei einer Prozedur zur Aktualisierung des Aufenthaltsortes des Netzteilnehmers 3 (eine Location Update Procedure) zwischen der Netzvermittlungseinheit 2 und dem Netzteilnehmer 3 dargestellt, wobei nun eine Konfiguration gezeigt wird, in welcher die Netzvermittlungseinheit 2 wiederum die Verwendung des zweiten Verschlüsselungsalgorithmus bzw. des A5/3-Algorithmus anbietet und der Netzteilnehmer 3, im Unterschied zu der in Figur 2a illustrierten Konfiguration, nicht in der Lage ist, den zweiten Verschlüsselungsalgorithmus bzw. den A5/3-Algorithmus zu verwenden. Die erste, zweite, dritte, vierte, fünfte, sechste und siebte Nachricht 10, 11, 12, 13, 14, 15, 16 sind identisch zu der in Figur 2a illustrierten Konfiguration. Auch die erste Signalisierungsnachricht 17', in welcher dem Netzteilnehmer 3 von der Netzvermittlungseinheit 2 die Verwendung eines auf dem A5/1-Algorithmus basierenden ersten Verschlüsselungsalgorithmus, sowie die Verwendung eines auf dem A5/3-Algorithmus basierenden zweiten Verschlüsselungsalgorithmus angeboten werden, ist identisch. Die erste Signalisierungsnachrichtung 17' sieht beispielsweise wie folgt aus:

| |
|---|
| BSSAP |
| 00000000 BSSMAP = 0 (BSSMAP) |
| 00010010 Length Field = 18 |
| BSSMAP |
| Msg: CIPHER MODE COMMAND |
| 01010011 Tag = 83 (x53) |
| IE: Layer 3 header information |
| 00000111 Tag = 7 (x07) |
| 00000010 Length Field = 2 |
| ----0000 Not used = 0 |
| 0110-Protocol discriminator = 6 (Radio resources management messages) |
| ---0000 Not used = 0 |
| ---0---- TI flag = 0 (The message is sent from the side that originates the TI) |
| 000----- TI value = 0 |
| IE: Encryption information |
| 00001010 Tag = 10 (x0A) |
| 00001001 Length Field = 9 |
| -------1 No encryption = 1 (BSS may use the option) |
| ------1- GSM A5/1 = 1 (BSS may use the option) |
| -----0-- GSM A5/2 = 0 (BSS shall not use the option) |
| ----1--- GSM A5/3 = 1 (BSS may use the option) |
| ---0---- GSM A5/4 = 0 (BSS shall not use the option) |
| --0----- GSM A5/5 = 0 (BSS shall not use the option) |
| -0------ GSM A5/6 = 0 (BSS shall not use the option) |
| 0-GSM A5/7 = 0 (BSS shall not use the option) |
| Key = eb b4 23 57 a3 27 2c 00 |
| IE: Cipher response mode |
| 00100011 Tag = 35 (x23) |
| -0000000 Spare = 0 (Spare field (7 bits)) |
| 1------- Cipher response mode = 1 (IMEISV must be included by the Mobile Station) |

Im Unterschied zu der in Figur 2a gezeigten Konfiguration ist der Netzteilnehmer 3 nicht fähig, den A5/3-Algorithmus auszuwählen. Der Netzteilnehmer 3 sendet daher eine Signalisierungsantwort 18' zur Netzvermittlungseinheit 2, in welcher der erste Verschlüsselungsalgorithmus, d.h. der A5/1-Algorithmus, ausgewählt wird.

Die Signalisierungsantwort 18' sieht dann beispielsweise wie folgt aus:

| |
|---|
| BSSAP |
| 00000000 BSSMAP = 0 (BSSMAP) |
| 00010000 Length Field = 16 |
| BSSMAP |
| Msg: CIPHER MODE COMPLETE |
| 01010101 Tag = 85 (x55) |
| IE: Layer 3 message contents |
| 00100000 Tag = 32 (x20) |
| 00001011 Length Field = 11 |
| Mobile identity |
| 00010111 Tag = 23 (x17) |
| 00001001 Length Field = 9 |
| -----011 Type of identity = 3 (IMEISV) |
| ----0--- Odd/even indicator = 0 (Even number of identity digits and also when the |
| TMSI is used) |
| Address signals = 3532330165997424f |
| IE: Chosen encryption algorithm |
| 00101100 Tag = 44 (x2C) |
| 00000010 Algorithm identifier = 2 (GSM A5/1) |

Die nachfolgende achte, neunte, zehnte, elfte und zwölfte Nachricht 19, 20, 21, 22, 23 sind wieder identisch mit der in Figur 2a gezeigten Konfiguration, wobei nun die A5/1-Verschlüsselung (zumindest im achten Schritt) angewendet wird.

In **Figur 2c** ist nun erneut der Nachrichtenfluss bei einer Prozedur zur Aktualisierung des Aufenthaltsortes des Netzteilnehmers 3 (eine Location Update Procedure) zwischen der Netzvermittlungseinheit 2 und dem Netzteilnehmer 3 dargestellt, in welcher die Netzvermittlungseinheit 2 wiederum die Verwendung des zweiten Verschlüsselungsalgorithmus bzw. des A5/3-Algorithmus anbietet. In der in Figur 2c gezeigten Konfiguration ist der Netzteilnehmer 3, wie in Figur 2b, erneut nicht in der Lage, den zweiten Verschlüsselungsalgorithmus bzw. den A5/3-Algorithmus zu verwenden, wobei im Unterschied zur Figur 2b das Anbieten des A5/3-Algorithmus jedoch dazu führt, dass der Netzteilnehmer 3 überhaupt keine Signalisierungsantwort an die Netzvermittlungseinheit 2 sendet.

Die erste, zweite, dritte, vierte, fünfte, sechste und siebte Nachricht 10, 11, 12, 13, 14, 15, 16 sind identisch zu der in Figur 2b illustrierten Konfiguration. Auch die erste Signalisierungsnachricht 17", in welcher dem Netzteilnehmer 3 von der Netzvermittlungseinheit 2 die Verwendung eines auf dem A5/1-Algorithmus basierenden ersten Verschlüsselungsalgorithmus, sowie die Verwendung eines auf dem A5/3-Algorithmus basierenden zweiten Verschlüsselungsalgorithmus angeboten werden, ist identisch. Die erste Signalisierungsnachrichtung 17" sieht beispielsweise wie folgt aus:

| |
|---|
| BSSAP |
| 00000000 BSSMAP = 0 (BSSMAP) |
| 00010010 Length Field = 18 |
| BSSMAP |
| Msg: CIPHER MODE COMMAND |
| 01010011 Tag = 83 (x53) |
| IE: Layer 3 header information |
| 00000111 Tag = 7 (x07) |
| 00000010 Length Field = 2 |
| ---0000 Not used = 0 |
| 0110-Protocol discriminator = 6 (Radio resources management messages) |
| ----0000 Not used = 0 |
| ---0---- TI flag = 0 (The message is sent from the side that originates the TI) |
| 000----- TI value = 0 |
| IE: Encryption information |
| 00001010 Tag = 10 (x0A) |
| 00001001 Length Field = 9 |
| -------1 No encryption = 1 (BSS may use the option) |
| ------1- GSM A5/1 = 1 (BSS may use the option) |
| -----0-- GSM A5/2 = 0 (BSS shall not use the option) |
| ----1--- GSM A5/3 = 1 (BSS may use the option) |
| ---0---- GSM A5/4 = 0 (BSS shall not use the option) |
| --0----- GSM A5/5 = 0 (BSS shall not use the option) |
| -0------ GSM A5/6 = 0 (BSS shall not use the option) |
| 0------- GSM A5/7 = 0 (BSS shall not use the option) |
| Key = eb b4 23 57 a3 27 2c 00 |
| IE: Cipher response mode |
| 00100011 Tag = 35 (x23) |
| -0000000 Spare = 0 (Spare field (7 bits)) |
| 1------- Cipher response mode = 1 (IMEISV must be included by the Mobile Station) |

Das Anbieten des zweiten Verschlüsselungsalgorithmus führt dazu, dass der Netzteilnehmer 3 nicht auf die erste Signalisierungsnachricht 17" antwortet. Die Netzvermittlungseinheit 2 wartet für eine vorbestimmte Zeitspanne auf die Signalisierungsnachricht von dem Netzteilnehmer 3. Wenn innerhalb dieser Zeitspanne keine Signalisierungsnachrichtung eingeht ("MSS TimeOut" 24), sendet die Netzvermittlungseinheit 2 eine zweite Signalisierungsnachricht 25 an den Netzteilnehmer 3, in welcher nur noch der erste Verschlüsselungsalgorithmus, d.h. der A5/1-Algorithmus, angeboten wird. Der zweite Verschlüsselungsalgorithmus, d.h. der A5/3-Algorithmus, wird nicht mehr angeboten.

Die zweite Signalisierungsnachrichtung 25 sieht beispielsweise wie folgt aus:

| |
|---|
| BSSAP |
| 00000000 BSSMAP = 0 (BSSMAP) |
| 00010010 Length Field = 18 |
| BSSMAP |
| Msg: CIPHER MODE COMMAND |
| 01010011 Tag = 83 (x53) |
| IE: Layer 3 header information |
| 00000111 Tag = 7 (x07) |
| 00000010 Length Field = 2 |
| ---0000 Not used = 0 |
| 0110-Protocol discriminator = 6 (Radio resources management messages) |
| ----0000 Not used = 0 |
| ---0---- TI flag = 0 (The message is sent from the side that originates the TI) |
| 000----- TI value = 0 |
| IE: Encryption information |
| 00001010 Tag = 10 (x0A) |
| 00001001 Length Field = 9 |
| -------1 No encryption = 1 (BSS may use the option) |
| ------1- GSM A5/1 = 1 (BSS may use the option) |
| -----0-- GSM A5/2 = 0 (BSS shall not use the option) |
| ----0--- GSM A5/3 = 0 (BSS may not use the option) |
| ---0---- GSM A5/4 = 0 (BSS shall not use the option) |
| --0----- GSM A5/5 = 0 (BSS shall not use the option) |
| -0------ GSM A5/6 = 0 (BSS shall not use the option) |
| 0-GSM A5/7 = 0 (BSS shall not use the option) |
| Key = eb b4 23 57 a3 27 2c 00 |
| IE: Cipher response mode |
| 00100011 Tag = 35 (x23) |
| -0000000 Spare = 0 (Spare field (7 bits)) |
| 1------- Cipher response mode = 1 (IMEISV must be included by the Mobile Station) |

Der Netzteilnehmer 3 ist nun in der Lage den ersten Verschlüsselungsalgorithmus bzw. den A5/1-Algorithmus auszuwählen und wird nicht länger durch das Anbieten des zweiten Verschlüsselungsalgorithmus gestört. Der Netzteilnehmer 3 sendet daher eine Signalisierungsantwort 18" zur Netzvermittlungseinheit 2, in welcher der erste Verschlüsselungsalgorithmus, d.h. der A5/1-Algorithmus, ausgewählt wird.

Die Signalisierungsantwort 18" sieht dann beispielsweise wie folgt aus:

| |
|---|
| BSSAP |
| 00000000 BSSMAP = 0 (BSSMAP) |
| 00010000 Length Field = 16 |
| BSSMAP |
| Msg: CIPHER MODE COMPLETE |
| 01010101 Tag = 85 (x55) |
| IE: Layer 3 message contents |
| 00100000 Tag = 32 (x20) |
| 00001011 Length Field = 11 |
| Mobile identity |
| 00010111 Tag = 23 (x17) |
| 00001001 Length Field = 9 |
| -----011 Type of identity = 3 (IMEISV) |
| ----0--- Odd/even indicator = 0 (Even number of identity digits and also when the TMSI is used) |
| Address signals = 3532330165997424f |
| IE: Chosen encryption algorithm |
| 00101100 Tag = 44 (x2C) |
| 00000010 Algorithm identifier = 2 (GSM A5/1) |

Die nachfolgende achte, neunte, zehnte, elfte und zwölfte Nachricht 19, 20, 21, 22, 23 sind wieder identisch mit der in Figur 2b gezeigten Konfiguration, wobei nun (zumindest im achten Schritt) die A5/1-Verschlüsselung angewendet wird.

Optional ist vorgesehen, dass die Netzvermittlungsstelle 2 die Teilnehmeridentifikation (IMSI) des Netzteilnehmers 3 im Besucherregister 5 speichert, wenn erkannt wird, dass dieser Netzteilnehmer 3 nur auf die zweite Signalisierungsnachricht 25 reagiert. Im Besucherregister 5 wird dann eine entsprechende Verschlüsselungsinformation gespeichert, dass diesem Netzteilnehmer 3 zukünftig der zweite Verschlüsselungsalgorithmus nicht mehr angeboten wird, sondern direkt nur noch mittels der zweiten Signalisierungsnachrichtung 25 der erste Verschlüsselungsalgorithmus angeboten wird. Das Besucherregister 5 weist somit vorzugsweise eine Liste auf, bei welchen Teilnehmern 3 die A5/3-Verschlüsselung nicht funktioniert, so dass der Netzbetreiber feststellen kann, wie oft ein Rückfall auf eine alternative Verschlüsselung erfolgt.

Denkbar ist, dass eine Aktualisierungszeitspanne derart festgelegt wird, dass bei einem Ablauf dieser Aktualisierungszeitspanne dem Netzteilnehmer erneut der zweite Verschlüsselungsalgorithmus mittels der ersten Signalisierungsnachricht 17, 17', 17" angeboten wird, damit beispielsweise im Falle eines Gerätewechsels oder Software-Updates (wodurch die Verarbeitung des zweiten Verschlüsselungsalgorithmus möglich wird) beim Netzteilnehmer 3 auf den verbesserten A5/3-Algorithmus umgestellt werden kann.

Es ist ferner denkbar, dass das Verfahren für "National Roaming", "Network Sharing" und für "Roaming Teilnehmer" im gleichen Besucherregister entsprechend der Funktion für HPMLN (Home Public Land Mobile Network) Teilnehmer angewendet wird.

Das erfindungsgemäße Verfahren ist in den Figuren 2a, 2b und 2c nur beispielhaft anhand einer Aufenthaltsaktualisierungsprozedur beschrieben. Es kann natürlich gleichermaßen auch bei alle anderen Signalisierungsfunktionen, bei denen eine Verschlüsselung notwendig ist, eingesetzt werden.

In **Figur 3** ist zu Anschauungszwecken eine zur Figur 2c ähnliche Konfiguration illustriert, bei welcher das erfindungsgemäße Verfahren nicht angewendet wird.

Die erste, zweite, dritte, vierte, fünfte, sechste und siebte Nachricht 10, 11, 12, 13, 14, 15, 16 sind identisch zu der in Figur 2c illustrierten Konfiguration. Auch die erste Signalisierungsnachricht 17", in welcher dem Netzteilnehmer 3 von der Netzvermittlungseinheit 2 die Verwendung eines auf dem A5/1-Algorithmus basierenden ersten Verschlüsselungsalgorithmus, sowie die Verwendung eines auf dem A5/3-Algorithmus basierenden zweiten Verschlüsselungsalgorithmus angeboten werden, ist identisch. Der Netzteilnehmer 3 sendet daraufhin keine Signalisierungsantwort, so dass es zu einem MSS TimeOut 24 kommt. Die Netzvermittlungseinheit 2 sendet dann eine dreizehnte Nachricht 26, in welcher die Ablehnung der Verschlüsselung angezeigt wird ("Cipher Mode Reject"). Die dreizehnte Nachricht sieht dann beispielsweise wie folgt aus:

| |
|---|
| BSSAP |
| 00000000 BSSMAP = 0 (BSSMAP) |
| 00000100 Length Field = 4 |
| BSSMAP |
| Msg: CIPHER MODE REJECT |
| 01011001 Tag = 89 (x59) |
| IE: Cause |
| 00000100 Tag = 4 (x04) |
| 00000001 Length Field = 1 |
| -------0 Extension = 0 (Last octet) |
| 0000000- Cause Value = 0 (Radio interface message failure) |

Der Nachrichtenfluss zwischen dem Netzteilnehmer 3 und der Netzvermittlungseinheit 2 ist somit gestört und eine Aufenthaltsaktualisierung kann nicht durchgeführt werden (die achte Nachrichtung 19 "Location Update Accept" fehlt daher in Figur 3). Die nachfolgende neunte, zehnte, elfte und zwölfte Nachricht 20, 21, 22, 23 sind wieder identisch mit der in Figur 2c gezeigten Konfiguration.

## Patentansprüche

1. Verfahren zum Aufbau einer verschlüsselten Verbindung (6) zwischen einem Netzteilnehmer (3) und einer mit einer Netzvermittlungseinheit (2) gekoppelten Basisstation (3') eines Mobilfunknetzes (4) via GSM mit den folgenden Schritten:
-- Senden einer ersten Signalisierungsnachricht (17, 17', 17") zum Anbieten eines Verschlüsselungsmechanismus von der Netzvermittlungseinheit (2) an den Netzteilnehmer (3) in einem ersten Verfahrensschritt, wobei mittels der ersten Signalisierungsnachricht (17, 17', 17") wenigstens ein erster Verschlüsselungsalgorithmus und ein zweiter Verschlüsselungsalgorithmus angeboten wird,
-- Warten auf eine vom Netzteilnehmer (3) an die Netzvermittlungseinheit (2) gesendete Signalisierungsantwort (18, 18', 18") zum Auswählen eines der mittels der ersten Signalisierungsnachricht angebotenen Verschlüsselungsmechanismen in einem zweiten Verfahrensschritt und
-- Senden einer zweiten Signalisierungsnachricht (25) zum Anbieten eines Verschlüsselungsmechanismus von der Netzvermittlungseinheit (2) an den Netzteilnehmer (3) in einem dritten Verfahrensschritt, wenn im zweiten Verfahrensschritt innerhalb einer vorbestimmten Zeitspanne keine vom Netzteilnehmer (3) an die Netzvermittlungseinheit (2) gesendete Signalisierungsantwort (18, 18', 18") detektiert wird, wobei mittels der zweiten Signalisierungsnachricht (25) nur der erste Verschlüsselungsalgorithmus angeboten wird.

2. Verfahren nach Anspruch 1, wobei mittels der ersten Signalisierungsnachricht (17, 17', 17") ein A5/3-Verschlüsselungsalgorithmus als zweiter Verschlüsselungsalgorithmus angeboten wird.

3. Verfahren nach einem der vorhergehenden Ansprüche, wobei mittels der ersten (17, 17', 17") und zweiten Signalisierungsnachricht (25) jeweils wenigstens ein A5/1-Verschlüsselungsalgorithmus als erster Verschlüsselungsalgorithmus angeboten wird.

4. Verfahren nach einem der vorhergehenden Ansprüche, wobei in einem vierten Verfahrensschritt eine Signalisierungsantwort (18, 18', 18") von dem Netzteilnehmer (3) an die Netzvermittlungseinheit (2) gesendet wird, mittels welcher der erste Verschlüsselungsalgorithmus ausgewählt wird, und wobei in einem fünften Verfahrensschritt eine mittels des ausgewählten ersten Verschlüsselungsalgorithmus verschlüsselte Verbindung (6) zwischen dem Netzteilnehmer (3) und der Basisstation (3') aufgebaut wird.

5. Verfahren nach einem der vorhergehenden Ansprüche, wobei in einem sechsten Verfahrensschritt eine Teilnehmeridentifizierung (IMSI) des Netzteilnehmers (3) und eine der Teilnehmeridentifizierung zugeordnete Verschlüsselungsinformation in einem Besucherregister (5) der Netzvermittlungseinheit (2) gespeichert werden.

6. Verfahren nach Anspruch 5, wobei bei einem erneuten Aufbau einer verschlüsselten Verbindung (6) zwischen dem Netzteilnehmer (3) und der Basisstation (3') die der Teilnehmeridentifizierung zugeordnete Verschlüsselungsinformation des Netzteilnehmers (3) im Besucherregister (5) abgefragt wird und in Abhängigkeit der im Besucherregister (5) gespeicherten Verschlüsselungsinformation direkt eine zweite Signalisierungsnachricht von der Netzvermittlungseinheit (2) an den Netzteilnehmer (3) gesendet wird.

7. Verfahren nach einem der Ansprüche 5 oder 6, wobei nach Ablauf einer vorbestimmten Aktualisierungszeitspanne die einer Teilnehmeridentifizierung zugeordnete Verschlüsselungsinformation aus dem Besucherregister (5) wieder gelöscht und/oder bei einem erneuten Aufbau einer verschlüsselten Verbindung (6) zwischen dem Netzteilnehmer (3) und der Basisstation (3') wieder eine erste Signalisierungsnachricht (17, 17', 17") von der Netzvermittlungseinheit (2) an den Netzteilnehmer (3) gesendet wird.

8. Verfahren nach einem der vorhergehenden Ansprüche, wobei wenigstens der erste, der zweite und der dritte Verfahrensschritt während einer Prozedur zur Aktualisierung des Aufenthaltsortes des Netzteilnehmers (3) in einem Mobilfunknetz (4), während einer Prozedur zur Zuordnung eines austauschbaren Teilnehmeridentifikationsmoduls (TMSI) zum Netzteilnehmer (3) und/oder während einer Prozedur zur Ausführung eines Kommunikationsdienstes durchgeführt werden.

9. Netzvermittlungseinheit (2) für ein Telekommunikationssystem (1), wobei die Netzvermittlungseinheit (2) zum Senden einer ersten Signalisierungsnachricht (17, 17', 17") zum Anbieten wenigstens eines ersten Verschlüsselungsalgorithmus und eines zweiten Verschlüsselungsalgorithmus an einen Netzteilnehmer (3) via GSM konfiguriert ist und wobei die Netzvermittlungseinheit (2) zum Senden einer zweiten Signalisierungsnachricht (25) an den Netzteilnehmer (3) zum Anbieten nur des ersten Verschlüsselungsalgorithmus konfiguriert ist, wenn innerhalb einer vorbestimmten Zeitspanne keine vom Netzteilnehmer (3) gesendete Signalisierungsantwort (18, 18', 18") detektiert wird.

10. Telekommunikationssystem (1) für ein Mobilfunknetz (4) aufweisend wenigstens eine Netzvermittlungseinheit (2) nach Anspruch 9 und wenigstens einen Netzteilnehmer (3).

11. Computerprogramm mit Programmcodemitteln, mit deren Hilfe alle Schritte eines Verfahrens nach einem der Ansprüche 1 bis 8 durchführbar sind, wenn das Computerprogramm auf einer Netzvermittlungseinheit (2) oder einem Computer ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer Netzvermittlungseinheit (2) oder einem Computer ausgeführt wird.

## Claims

1. Method for establishing, via GSM, an encrypted connection (6) between a network subscriber (3) and a base station (3') of a mobile radio network (4), said base station being coupled to a network distribution unit (2), said method comprising the following steps:
- sending a first signalling message (17, 17', 17") for offering an encryption mechanism from the network distribution unit (2) to the network subscriber (3) in a first method step, wherein at least one first encryption algorithm and one second encryption algorithm are offered by means of the first signalling message (17, 17', 17"),
- waiting for a signalling response (18, 18', 18") sent by the network subscriber (3) to the network distribution unit (2) to select, in a second method step, one of the encryption mechanisms offered by means of the first signalling message, and
- sending a second signalling message (25) to offer an encryption mechanism from the network distribution unit (2) to the network subscriber (3) in a third method step when, in the second method step, a signalling response (18, 18', 18") sent by the network subscriber (3) to the network distribution unit (2) is not detected within a predetermined time period, wherein only the first encryption algorithm is offered by means of the second signalling message (25) .

2. Method as claimed in claim 1, wherein an A5/3 encryption algorithm is offered as a second encryption algorithm by means of the first signalling message (17, 17', 17").

3. Method as claimed in any one of the preceding claims, wherein at least one A5/1 encryption algorithm is offered as a first encryption algorithm in each case by means of the first (17, 17', 17") and second (25) signalling message.

4. Method as claimed in any one of the preceding claims, wherein in a fourth method step a signalling response (18, 18', 18") is sent by the network subscriber (3) to the network distribution unit (2), by means of which the first encryption algorithm is selected, and wherein in a fifth method step a connection (6), encrypted by means of the selected first encryption algorithm, is established between the network subscriber (3) and the base station (3').

5. Method as claimed in any one of the preceding claims, wherein in a sixth method step a subscriber identification (IMSI) of the network subscriber (3) and encryption information associated with the subscriber identification are stored in a visitor register (5) of the network distribution unit (2).

6. Method as claimed in claim 5, wherein upon a re-establishment of an encrypted connection (6) between the network subscriber (3) and the base station (3') the encryption information, associated with the subscriber identification, of the network subscriber (3) is queried in the visitor register (5) and a second signalling message is sent directly by the network distribution unit (2) to the network subscriber (3) in dependence upon the encryption information stored in the visitor register (5) .

7. Method as claimed in any one of claims 5 or 6, wherein after a predetermined updating time period has expired the encryption information associated with a subscriber identification is deleted from the visitor register (5) and/or a first signalling message (17, 17', 17") is sent by the network distribution unit (2) to the network subscriber (3) upon a re-establishment of an encrypted connection (6) between the network subscriber (3) and the base station (3').

8. Method as claimed in any one of the preceding claims, wherein at least the first, second and third method steps are performed during a procedure for updating the location of the network subscriber (3) in a mobile radio network (4), during a procedure for associating an exchangeable subscriber identification module (TMSI) with the network subscriber (3) and/or during a procedure for performing a communications service.

9. Network distribution unit (2) for a telecommunications system (1), wherein the network distribution unit (2) is configured for sending a first signalling message (17, 17', 17") to offer at least one first encryption algorithm and one second encryption algorithm to a network subscriber (3) via GSM, and wherein the network distribution unit (2) is configured to send a second signalling message (25) to the network subscriber (3) to offer only the first encryption algorithm when a signalling response (18, 18', 18") sent by the network subscriber (3) is not detected within a predetermined time period.

10. Telecommunications system (1) for a mobile radio network (4) comprising at least one network distribution unit (2) as claimed in claim 9 and at least one network subscriber (3) .

11. Computer program comprising program code means, by means of which all the steps of a method as claimed in any one of claims 1 to 8 can be performed when the computer program is run on a network distribution unit (2) or a computer.

12. Computer program product having a computer-readable medium and a computer program stored on the computer-readable medium, said computer program comprising program code means which are suitable such that all the steps of a method as claimed in any one of claims 1 to 8 can be performed when the computer program is run on a network distribution unit (2) or a computer.

## Revendications

1. Procédé destiné à établir, via GSM, une liaison chiffrée (6) entre un abonné de réseau (3) et une station de base (3') d'un réseau de téléphonie mobile (4) couplée à une unité de commutation de réseau (2), comprenant les étapes suivantes consistant à :
- dans une première étape de procédé, envoyer un premier message de signalisation (17, 17', 17") pour proposer un mécanisme de chiffrement à l'abonné de réseau (3) par l'unité de commutation de réseau (2), au moins un premier algorithme de chiffrement et un second algorithme de chiffrement étant proposés au moyen du premier message de signalisation (17, 17', 17"),
- dans une deuxième étape de procédé, attendre une réponse de signalisation (18, 18', 18") envoyée par l'abonné de réseau (3) à l'unité de commutation de réseau (2) pour sélectionner un des mécanismes de chiffrement proposés au moyen du premier message de signalisation et
- dans une troisième étape de procédé, envoyer un second message de signalisation (25) pour proposer un mécanisme de chiffrement à l'abonné de réseau (3) par l'unité de commutation de réseau (2) lorsque, dans la deuxième étape de procédé, aucune réponse de signalisation (18, 18', 18") envoyée par l'abonné de réseau (3) à l'unité de commutation de réseau (2) n'est détectée en une période prédéfinie, seul le premier algorithme de chiffrement étant proposé au moyen du second message de signalisation (25).

2. Procédé selon la revendication 1, dans lequel un algorithme de chiffrement A5/3 est proposé comme second algorithme de chiffrement au moyen du premier message de signalisation (17, 17', 17").

3. Procédé selon l'une des revendications précédentes, dans lequel au moins un algorithme de chiffrement A5/1 est proposé comme premier algorithme de chiffrement respectivement au moyen du premier (17, 17', 17") et du second message de signalisation (25).

4. Procédé selon l'une des revendications précédentes, dans lequel, dans une quatrième étape de procédé, une réponse de signalisation (18, 18', 18") est envoyée à l'unité de commutation de réseau (2) par l'abonné de réseau (3), au moyen de laquelle le premier algorithme de chiffrement est sélectionné, et dans lequel, dans une cinquième étape de procédé, une liaison chiffrée (6) est établie entre l'abonné de réseau (3) et la station de base (3') au moyen du premier algorithme de chiffrement sélectionné.

5. Procédé selon l'une des revendications précédentes, dans lequel, dans une sixième étape de procédé, un identifiant d'abonné (IMSI) de l'abonné de réseau (3) et une information de chiffrement associée à l'identifiant d'abonné sont enregistrés dans un enregistreur de localisation des visiteurs (5) de l'unité de commutation de réseau (2).

6. Procédé selon la revendication 5, dans lequel, lors d'un nouvel établissement d'une liaison chiffrée (6) entre l'abonné de réseau (3) et la station de base (3'), l'information de chiffrement associée à l'identifiant d'abonné de l'abonné de réseau (3) est demandée dans l'enregistreur de localisation des visiteurs (5) et en fonction de l'information de chiffrement enregistrée dans l'enregistreur de localisation des visiteurs (5), un second message de signalisation est directement envoyé à l'abonné de réseau (3) par l'unité de commutation de réseau (2).

7. Procédé selon l'une des revendications 5 ou 6, dans lequel, après l'écoulement d'une période de mise à jour prédéfinie, l'information de chiffrement associée à un identifiant d'abonné est de nouveau supprimée de l'enregistreur de localisation des visiteurs (5) et/ou lors d'un nouvel établissement d'une liaison chiffrée (6) entre l'abonné de réseau (3) et la station de base (3'), un premier message de signalisation (17, 17', 17") est de nouveau envoyé à l'abonné de réseau (3) par l'unité de commutation de réseau (2).

8. Procédé selon l'une des revendications précédentes, dans lequel au moins la première, la deuxième et la troisième étape de procédé est exécutée pendant une procédure de mise à jour du lieu de séjour de l'abonné de réseau (3) dans un réseau de téléphonie mobile (4), pendant une procédure d'association d'un module d'identifiant d'abonné interchangeable (TMSI) à l'abonné de réseau (3) et/ou pendant une procédure d'exécution d'un service de communication.

9. Unité de commutation de réseau (2) pour un système de télécommunication (1), dans laquelle l'unité de commutation de réseau (2) est configurée pour envoyer, via GSM, un premier message de signalisation (17, 17', 17") afin de proposer au moins un premier algorithme de chiffrement et un second algorithme de chiffrement à un abonné de réseau (3), et dans laquelle l'unité de commutation de réseau (2) est configurée pour envoyer un second message de signalisation (25) à l'abonné de réseau (3) afin de proposer uniquement le premier algorithme de chiffrement, lorsqu'aucune réponse de signalisation (18, 18', 18") envoyée par l'abonné de réseau (3) n'est détectée en une période prédéfinie.

10. Système de télécommunication (1) pour un réseau de téléphonie mobile (4) comportant au moins une unité de commutation de réseau (2) selon la revendication 9 et au moins un abonné de réseau (3).

11. Programme informatique comprenant des moyens de code de programme, à l'aide desquels toutes les étapes d'un procédé selon l'une des revendications 1 à 8 peuvent être effectuées lorsque le programme informatique est exécuté sur une unité de commutation de réseau (2) ou sur un ordinateur.

12. Produit de programme informatique comprenant un support lisible par ordinateur et un programme informatique enregistré sur le support lisible par ordinateur comprenant des moyens de code de programme, qui sont adaptés pour que toutes les étapes d'un procédé selon l'une des revendications 1 à 8 puissent être effectuées lorsque le programme informatique est exécuté sur une unité de commutation de réseau (2) ou sur un ordinateur.
